# EUROPÄISCHE PATENTSCHRIFT

(11) **EP 3 129 679 B1**
(45) Veröffentlichungstag und Bekanntmachung des Hinweises auf die Patenterteilung: **17.04.2019**
(21) Anmeldenummer: 15725283.4
(22) Anmeldetag: 20.05.2015
(51) Int. Cl.: F16H 25/20, F16H 25/22, F16H 57/00

(54) **GETRIEBE ZUR UMWANDLUNG EINER ROTATORISCHEN BEWEGUNG IN EINE LINEARE BEWEGUNG**
MECHANISM FOR CONVERTING A ROTARY MOTION INTO A LINEAR MOTION
TRANSMISSION POUR CONVERTIR UN MOUVEMENT DE ROTATION EN UN MOUVEMENT LINÉAIRE

(30) Priorität: 12.06.2014 DE 102014008329
(43) Veröffentlichungstag der Anmeldung: 15.02.2017
(73) Patentinhaber: Siemens Mobility GmbH, 81739 München (DE)
(72) Erfinder: VOGT, Jens, 12587 Berlin (DE)
(86) Internationale Anmeldenummer: PCT/EP2015/061108
(87) Internationale Veröffentlichungsnummer: WO 2015/189015

(56) Entgegenhaltungen:
- DE-A1- 2 742 163
- DE-C2- 4 322 133
- JP-A- 2013 237 411
- US-A- 5 816 555
- US-A1- 2006 048 592

## Beschreibung

Getriebe weisen in bekannter Weise neben einem gestellfesten Abstützglied ein Antriebsglied und ein Abtriebsglied auf.

Bei Getrieben zur Umwandlung einer rotatorischen Bewegung in eine lineare Bewegung - insbesondere bei Gewindetrieben (auch bekannt als Gewindespindel-Mutter-Triebe) - ist das Antriebsglied drehgetrieben und das Abtriebsglied ist linearbeweglich (vgl. Taschenbuch für den Maschinenbau / Dubbel. Hrsg. von W. Beitz und K.-H. Grote. - 20. Auflage, Springer, 2001; ISBN 3-540-67777-1, Seiten T16 - T18).

Bei derartigen Getrieben sind stoßartige Krafteinwirkungen oftmals Ursache für vorzeitigen Verschleiß bzw. nachhaltige Schädigung, als Folge derer es zu Wirkungsgradverlusten bzw. zu vorzeitigem Ausfall der Getriebe kommen kann.

Die Erfindung betrifft ein Getriebe zur Umwandlung einer rotatorischen in eine lineare Bewegung mit einem drehgetriebenen Antriebsglied, mit einem linearbewegten Abtriebsglied und mit einer Dämpfungseinrichtung, mittels derer das Abtriebsglied in Richtung seiner linearen Bewegung bidirektional federnd gehalten ist.

Ein Getriebe mit einer Gewindespindel als Antriebsglied und einer Spindelmutter als Abtriebsglied ist aus der Patentschrift DE 43 22 133 C2 bekannt. Bei diesem bekannten Getriebe umfasst die Dämpfungseinrichtung einen Dämpfungskäfig und eine Federeinrichtung. Dabei ist die Federeinrichtung beispielsweise als Puffereinrichtung - dort auch als Ringpuffer-Lagerung bezeichnet - ausgebildet, wobei vorgeschlagen wird an dem Dämpfungskäfig nach innen reichende Ansätze vorzusehen, um der eingesetzten Puffereinrichtung genügend Halt zu geben. Der Dämpfungskäfig ist von einer Schubhülse getragen, wobei die Dämpfungseinrichtung ruckartige Kräfte dämpft, die über die Schubhülse auf das Getriebe wirken.

Aus der US 2006/0048592 A1 ist ein Getriebe nach dem Oberbegriff des Anspruchs 1 bekannt.

Der Erfindung liegt die Aufgabe zu Grunde, Energie, die durch eine abtriebsseitig wirkende Kraft in das Getriebe eingeleitete wird, auf einfache Weise und damit kostengünstig zu dämpfen.

Gelöst wird diese Aufgabe durch ein Getriebe mit den Merkmalen des Patentanspruches 1, bei dem die Dämpfungseinrichtung stoffschlüssig mit dem Abtriebsglied verbunden ist. Die mechanische Belastung, insbesondere von Kontakstellen zwischen Antriebsglied und Abtriebsglied, kann dadurch auf konstruktive einfache Weise reduziert und damit eine Schädigungen des Getriebes vermieden werden.

Erfindungsgemäß ist das Antriebsglied eine Gewindespindel und das Abtriebsglied eine Spindelmutter. Dabei kann die Gewindespindel eine Trapezgewindespindel und die Spindelmutter eine Trapezgewindemutter sein. Alternativ kann die Gewindespindel eine Kugelrollspindel und die Spindelmutter eine mit Kugeln versehene Kugelgewindemutter sein.

Erfindungsgemäß weist die Dämpfungseinrichtung zumindest ein erstes hohlzylindrisches Anschlagelement und zumindest ein erstes Dämpfungselement auf.

Erfindungsgemäß ist vorgesehen, dass das erste Dämpfungselement stoffschlüssig mit der Außenmantelfläche der Spindelmutter und mit der Innenmantelfläche des ersten Anschlagelementes verbunden ist. - Um dabei sicherzustellen, dass abtriebsseitig wirkende Gegenkräfte, insbesondere Kraftstöße, nur mittelbar über die Dämpfungseinrichtung auf die Spindelmutter einwirken, ist vorgesehen, dass das erste Anschlagelement die Spindelmutter in den beiden Richtungen der linearen Bewegung überragt.

Bei einer alternativen Ausführungsform , die nicht beansprucht wird, ist vorgesehen, dass das erste Dämpfungselement stoffschlüssig mit einer ersten Stirnseite der Spindelmutter und mit einer Stirnseite des ersten Anschlagelementes verbunden ist und dass die Dämpfungseinrichtung ein zweites hohlzylindrisches Anschlagelement und ein zweites Dämpfungselement aufweisen, wobei das zweite Dämpfungselement stoffschlüssig mit einer zweiten Stirnseite der Spindelmutter und mit einer Stirnseite des zweiten Anschlagelementes verbunden ist.

Vorzugsweise sind die Dämpfungselemente jeweils als eine, insbesondere elektrisch isolierende, Vulkanisierschicht ausgebildet. Diese Vulkanisierschichten sind bevorzugt aus Nitril-Butadien-Kautschuk (NBR) oder Polyurethan gebildet.

Zur weiteren Erläuterung der Erfindung ist in den
Figur 1 und 2 eine erste Ausführungsform des erfindungsgemäßen Getriebes in zwei verschiedenen Zuständen, in den
Figur 3 und 4 eine zweite , nicht beanspruchte Ausführungsform des Getriebes in zwei verschiedenen Zuständen und in den
Figur 5 und 6 eine dritte Ausführungsform des erfindungsgemäßen Getriebes in zwei verschiedenen Zuständen gezeigt.

Die drei gezeigten Ausführungsformen 1; 101; 201 des Getriebes zur Umwandlung einer rotatorischen Bewegung 2; 102; 202 in eine lineare Bewegung 3; 103; 203 sind als Gewindetriebe ausgebildet und weisen jeweils neben einem hier nicht gezeigten gestellfesten Abstützglied ein drehgetriebenes Antriebsglied 4; 104; 204 in Form einer Gewindespindel und ein linearbewegtes Abtriebsglied 5; 105; 205 in Form einer Spindelmutter auf. Dabei ist die Richtung der linearen Bewegung 3; 103; 203 der Spindelmutter abhängig von der Drehrichtung der rotatorischen Bewegung 2; 102; 202 der Gewindespindel. So wird eine rechtsdrehende Bewegung der Gewindespindel in eine nach rechts gerichtete lineare Bewegung der Spindelmutter umgewandelt und eine linksdrehende Bewegung der Gewindespindel wird in eine nach links gerichtete lineare Bewegung der Spindelmutter umgewandelt.

Darüber hinaus weisen die drei Ausführungsformen 1; 101; 201 des Getriebes jeweils eine hier als Ganzes mit 6; 106; 206 bezeichnete Dämpfungseinrichtung auf, mittels derer das Abtriebsglied 5; 105; 205 in beide Richtungen seiner linearen Bewegung 3; 103; 203 - also bidirektional - federnd gehalten ist, um Stoßwirkungen abzumildern und somit insbesondere an Kontaktstellen 7; 107; 207 zwischen Antriebsglied 4; 104; 204 und Abtriebsglied 5; 105; 205 Verschleiß und Schäden zu vermindern, wodurch die Lebensdauer des Getriebes verlängert wird.

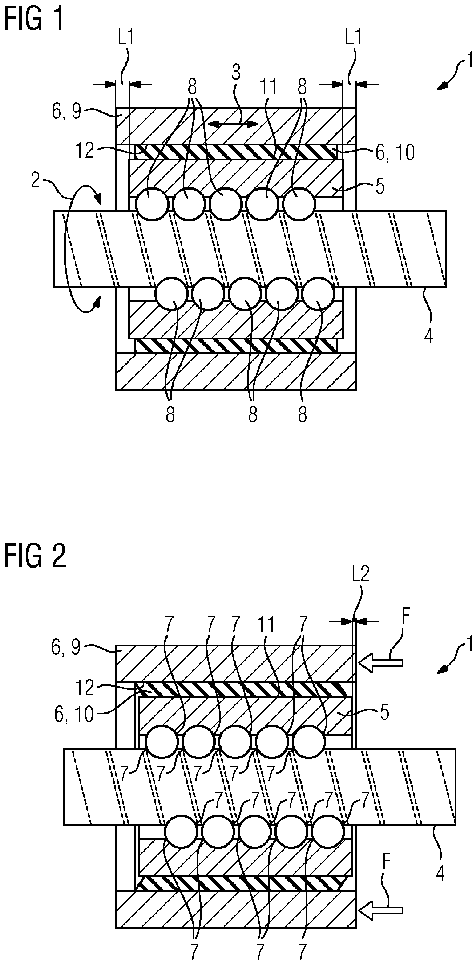

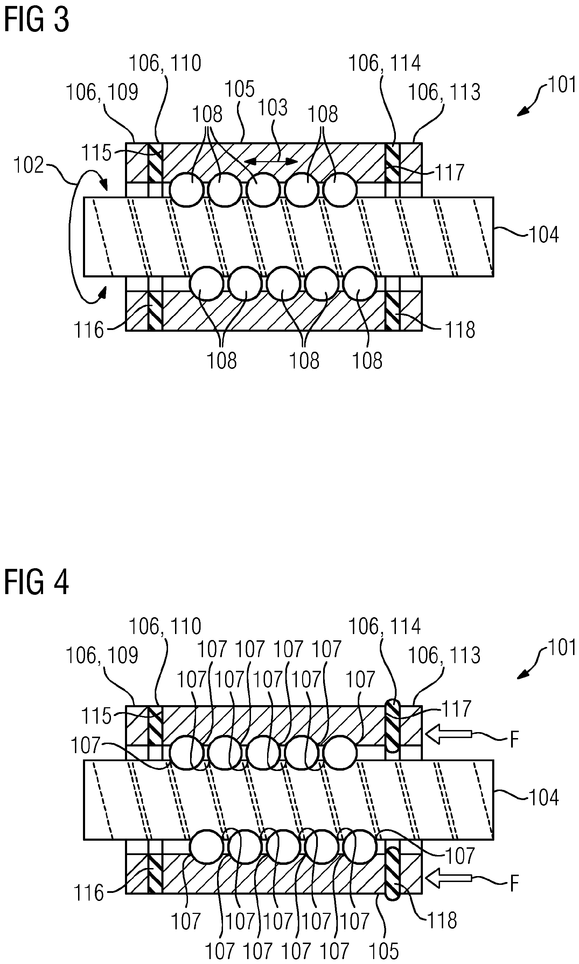

Bei der in den Figuren 1 und 2 gezeigten ersten Ausführungsform 1 des erfindungsgemäßen Getriebes und bei der in den Figuren 3 und 4 gezeigten zweiten Ausführungsform 101 des Getriebes handelt es sich jeweils um einen Gewindetrieb in Form eines Kugelgewindetriebes, bei dem die Gewindespindel 4; 104 eine Kugelrollspindel und die Spindelmutter 5; 105 eine mit Kugeln 8; 108 versehene Kugelrollmutter ist.

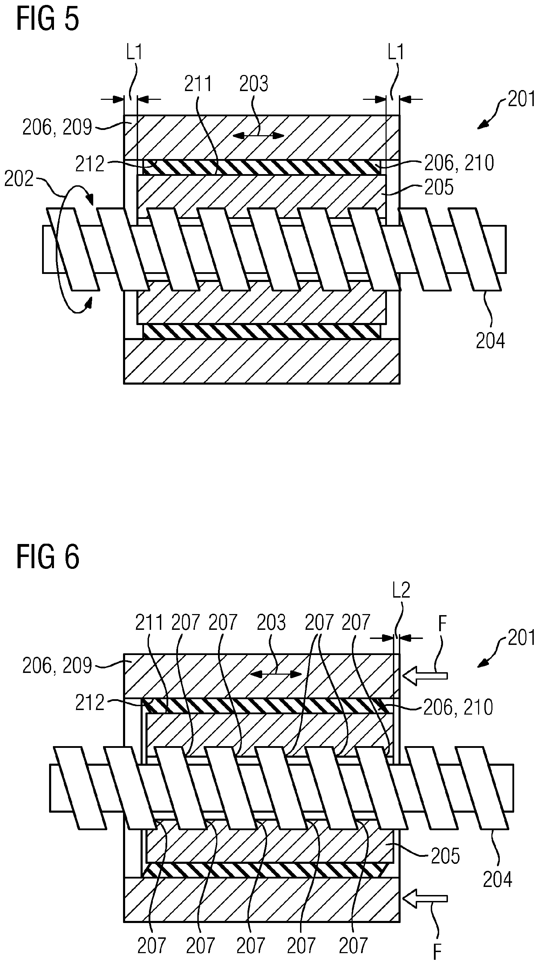

Bei der in den Figuren 5 und 6 gezeigten dritten Ausführungsform 201 des erfindungsgemäßen Getriebes handelt es sich um einen Gewindetrieb in Form eines Trapezgewindetriebes, bei dem die Gewindespindel 204 eine Trapezgewindespindel und die Spindelmutter 205 eine Trapezgewindemutter ist.

Bei der ersten Ausführungsform 1 des erfindungsgemäßen Getriebes und bei der dritten Ausführungsform 201 des erfindungsgemäßen Getriebes weist die Dämpfungseinrichtung 6; 206 ein hohlzylindrisches Anschlagelement 9; 209 und ein hohlzylindrisches Dämpfungselement 10; 210 auf.

Vorzugsweise sind die Spindelmutter 5; 205 und das Anschlagelement 9; 209 aus dem gleichen Material gebildet.

Das Dämpfungselement 10; 210 ist als Vulkanisierschicht ausgebildet und einerseits stoffschlüssig mit der Außenmantelfläche 11; 211 der Spindelmutter 5; 205 und andererseits stoffschlüssig mit der Innenmantelfläche 12; 212 des Anschlagelementes 9; 209 verbunden. Bei der Herstellung des Getriebes 1; 201 wird ein gezielt zwischen das Abtriebsglied 5; 205 und das Anschlagelement 9; 209 gebrachter Stoff mit plastischen Eigenschaften - vorzugsweise Nitril-Butadien-Kautschuk (NBR) oder Polyurethan - durch Vulkanisieren aus dem plastischen in einen elastischen Zustand überführt, so dass der nunmehr elastische Stoff als stoffschlüssig verbindende und elastische Zwischenlage in Form der Vulkanisierschicht zwischen dem Abtriebsglied 5; 205 und dem Anschlagelement 9; 209 verbleibt.

Die Figuren 1 und 5 zeigen die erste Ausführungsform 1 bzw. die dritte 201 Ausführungsform des erfindungsgemäßen Getriebes in einer unbelasteten ersten Stellung, bei der das Dämpfungselement 10; 210 unverformt ist.

In dieser unbelasteten ersten Stellung überragt das Anschlagelement 9; 209 die Spindelmutter 5; 205 in den beiden Richtungen der linearen Bewegung 3; 203 der Spindelmutter jeweils um eine erste Länge L1.

Im Vergleich hierzu zeigen die Figuren 2 und 6 die erste Ausführungsform 1 bzw. die dritte Ausführungsform 201 in einer zweiten Stellung, bei der eine Kraft F, insbesondere eine Stoßkraft, abtriebsseitig auf das Anschlagelement 9; 209 einwirkt. In dieser zweiten Stellung überragt das Anschlagelement 9; 209 die Spindelmutter 5; 205 auf der Seite, die der einwirkenden Kraft F zugewandt ist, nur noch um eine Länge L2, da das Anschlagelement 9; 209 unter der Einwirkung der Kraft F und der Verformung des Dämpfungselementes 10; 210 um den Differenzwert L2-L1 relativ zur Gewindespindel 4; 204 verschoben wurde.

Durch das Verformen des Dämpfungselementes 10; 210 wird ein Teil der Energie, die durch die einwirkende Kraft in das Getriebe eingebracht wird, in Verformungs- bzw. Wärmeenergie umgewandelt, so dass an den Kontakstellen 7; 207 nur der verbleibende Anteil der Kraft wirksam wird.

Bei der zweiten Ausführungsform 101 des Getriebes weist die Dämpfungseinrichtung 106 ein erstes hohlzylindrisches Anschlagelement 109 und ein erstes hohlzylindrisches Dämpfungselement 110 sowie ein zweites hohlzylindrisches Anschlagelement 113 und ein zweites hohlzylindrisches Dämpfungselement 114 auf. Die beiden Anschlagelemente 109, 113 und die beiden Dämpfungselemente 110, 114 umschließen die Gewindespindel 104 ohne diese zu berühren. Sie stehen also nur mittelbar über die Spindelmutter 105 und deren Kugeln 108 in Wirkverbindung mit der Gewindespindel 104.

Vorzugsweise sind die Spindelmutter 105 und die Anschlagelemente 109 und 113 aus dem gleichen Material gebildet.

Das erste Dämpfungselement 110 ist als Vulkanisierschicht ausgebildet und stoffschlüssig mit einer ersten Stirnseite 115 der Spindelmutter 105 und mit einer Stirnseite 116 des ersten Anschlagelementes 109 verbunden.

Das zweite Dämpfungselement 114 ist ebenfalls als Vulkanisierschicht ausgebildet jedoch stoffschlüssig mit einer zweiten Stirnseite 117 der Spindelmutter und mit einer Stirnseite 118 des zweiten Anschlagelementes 113 verbunden.

Bei der Herstellung des Getriebes 101 wird ein gezielt zwischen das Abtriebsglied 105 und die beiden Anschlagelemente 109, 113 gebrachter Stoff mit plastischen Eigenschaften - vorzugsweise Nitril-Butadien-Kautschuk (NBR) oder Polyurethan - durch Vulkanisieren aus dem plastischen in einen elastischen Zustand überführt, so dass der nunmehr elastische Stoff als stoffschlüssig verbindende und elastische Zwischenlagen in Form der beiden Vulkanisierschichten zwischen dem Abtriebsglied 105 und den Anschlagelementen 109, 113 verbleibt.

Die gezeigten Vulkanisierschichten 10 110, 114; 210 sind elektrisch isolierend ausgebildet.

Bei den Getrieben 1; 101; 201 ist das Dämpfungselement 10; 210 bzw. sind die Dämpfungselemente 110, 114 also quasi in den Grundkörper der Spindelmutter integriert, so dass sich das Getriebe durch einen sehr einfachen und leicht herstellbaren Aufbau auszeichnet.

## Patentansprüche

1. Getriebe (1; 201) zur Umwandlung einer rotatorischen Bewegung (2; 202) in eine lineare Bewegung (3; 203), auf welches in einer seiner Stellungen eine abtriebsseitig wirkende Gegenkraft (F) einwirkt, mit einem drehgetriebenen Antriebsglied (4; 204), mit einem linearbewegten Abtriebsglied (5; 205) und mit einer Dämpfungseinrichtung (6; 206), mittels derer das Abtriebsglied in beide Richtungen seiner linearen Bewegung federnd gehalten ist,
wobei das Antriebsglied (4; 204) eine Gewindespindel und
das Abtriebsglied (5; 205) eine Spindelmutter ist,
wobei die Dämpfungseinrichtung (6; 206) stoffschlüssig mit dem Abtriebsglied (5; 205) verbunden ist,
wobei die Dämpfungseinrichtung (6; 206) zumindest ein erstes hohlzylindrisches Anschlagelement (9; 209) und zumindest ein erstes Dämpfungselement (10; 210) aufweist und
wobei das erste Dämpfungselement (10; 210) stoffschlüssig mit der Außenmantelfläche (11; 211) der Spindelmutter (5; 205) und mit der Innenmantelfläche (12; 212) des ersten Anschlagelementes (9; 209) verbunden ist,
**dadurch gekennzeichnet,**
**dass** das erste Anschlagelement (9; 209) die Spindelmutter (5; 205) in den beiden Richtungen der linearen Bewegung (3; 203) überragt und die Gegenkraft (F) auf das Anschlagelement (9; 209) und nur mittelbar über die Dämpfungseinrichtung auf die Spindelmutter (5; 205) einwirkt.

2. Getriebe (1) nach Anspruch 1,
**dadurch gekennzeichnet, dass**
die Gewindespindel (4) eine Kugelrollspindel und die Spindelmutter (5) eine mit Kugeln (8) versehene Kugelgewindemutter ist.

3. Getriebe (201) nach Anspruch 1,
**dadurch gekennzeichnet, dass**
die Gewindespindel (204) eine Trapezgewindespindel und die Spindelmutter (205) eine Trapezgewindemutter ist.

4. Getriebe (1; 201) nach einem der Ansprüche 1 bis 3,
**dadurch gekennzeichnet, dass** das erste Dämpfungselement (10; 210) als eine, insbesondere elektrisch isolierende, Vulkanisierschicht ausgebildet ist.

5. Getriebe (1; 201) nach Anspruch 4,
**dadurch gekennzeichnet, dass**
die Vulkanisierschicht aus Nitril-Butadien-Kautschuk oder Polyurethan gebildet ist.

## Claims

1. Transmission (1; 201) for converting a rotary motion (2; 102; 202) into a linear motion (3; 203), upon which a counterforce (F) acting on the output side acts in one of its positions, comprising a rotatingly driven input drive member (4; 204), a linearly moved output drive member (5; 205) and a damping device (6; 206), by means of which the output drive member is held resiliently in both directions of its linear motion,
wherein the input drive member (4; 204) is a lead screw and the output drive member (5; 205) is a lead screw nut,
wherein the damping device (6; 206) is integrally joined to the output drive member (5; 205),
wherein the damping device (6; 206) comprises at least one first hollow cylindrical stop element (9; 209) and at least one first damping element (10; 210) and
wherein the first damping element (10; 210) is integrally joined to the outer casing surface (11; 211) of the lead screw nut (5; 205) and to the inner casing surface (12; 212) of the first stop element (9; 209),
**characterised in that**
the first stop element (9; 209) extends beyond the lead screw nut (5; 205) in both directions of the linear movement (3; 203) and the counterforce (F) acts upon the stop element (9; 209) and only indirectly upon the lead screw nut (5; 205) via the damping device.

2. Transmission (1) according to claim 1,
**characterised in that**
the lead screw (4) is a recirculating ball screw and the lead screw nut (5) is a ball nut provided with balls (8).

3. Transmission (201) according to claim 1,
**characterised in that**
the lead screw (204) is a trapezoidal lead screw and the lead screw nut (205) is a trapezoidal lead screw nut.

4. Transmission (1; 201) according to one of claims 1 to 3,
**characterised in that**
the first damping element (10; 210) is configured as a, particularly electrically insulating, vulcanised layer.

5. Transmission (1; 201) according to claim 4,
**characterised in that**
the vulcanised layers are made of nitrile-butadiene rubber or polyurethane.

## Revendications

1. Transmission (1 ; 201) pour transformer un mouvement (2 ; 202) de rotation en un mouvement (3 ; 203) linéaire, sur laquelle s'applique, en l'une de ses positions, une force (F) antagoniste s'appliquant du côté mené, comprenant un organe (4 ; 204) menant entraîné en rotation, comprenant un organe (5 ; 205) mené déplacé linéairement et comprenant un dispositif (6 ; 206) d'amortissement, au moyen duquel l'organe mené est maintenu élastiquement dans les deux sens de son déplacement linéaire, l'organe (4 ; 204) menant étant une broche filetée et l'organe (5 ; 205) mené, un écrou de broche,
dans laquelle le dispositif (6 ; 206) d'amortissement est relié à coopération de matière à l'organe (5 ; 205) mené,
dans laquelle le dispositif (6 ; 206) d'amortissement a au moins un premier élément (9 ; 209) cylindrique creux de butée et au moins un premier élément (10 ; 210) d'amortissement et dans laquelle le premier élément (10 ; 210) d'amortissement est relié à coopération de matière à la surface (11 ; 211) d'enveloppe extérieure de l'écrou (5 ; 205) de broche et à la surface (12 ; 212) intérieure d'enveloppe du premier élément (9 ; 209) de butée,
**caractérisée**
**en ce que** le premier élément (9 ; 209) de butée dépasse de l'écrou (5 ; 205) de broche dans les deux sens du déplacement linéaire et la force (F) antagoniste s'applique à l'élément (9 ; 209) de butée et seulement indirectement, par l'intermédiaire du dispositif d'amortissement, à l'écrou (5 ; 205) de broche.

2. Transmission (1) suivant la revendication 1,
**caractérisée en ce que** la broche (4) filetée est une broche à billes et l'écrou (5) de broche est un écrou taraudé pourvu de billes (8).

3. Transmission (201) suivant la revendication 1,
**caractérisée en ce que**
la broche (204) filetée est une broche filetée trapézoïdale et l'écrou (205) de broche est un écrou taraudé trapézoïdal.

4. Transmission (1 ; 201) suivant l'une des revendications 1 à 3,
**caractérisée en ce que**
le premier élément (10 ; 210) d'amortissement est constitué sous la forme d'une couche vulcanisée, notamment isolante du point de vue électrique.

5. Transmission (1 ; 201) suivant la revendication 4,
**caractérisée en ce que**
la couche vulcanisée est en caoutchouc nitrile-butadiène ou en polyuréthane.
